# EUROPEAN PATENT APPLICATION

(11) **EP 1 628 023 A2**
(43) Date of publication of application: **22.02.2006**
(21) Application number: 05014184.5
(22) Date of filing: 30.06.2005
(51) Int. Cl.: F16C 11/06

(54) **A spherical bearing arrangement**

(30) Priority: 20.08.2004 GB 0418672
(71) Applicant: MINEBEA CO.,LTD., Kitasaku-gun, Nagano 389-0293 (JP)
(72) Inventor: Essam, Steve NMB-Minebea U.K. Ltd., Lincoln, LN6 3RA (GB); Smith, Paul NMB-Minebea U.K. Ltd., Lincoln, LN6 3RA (GB)
(74) Representative: Hoarton, Lloyd Douglas Charles

(57) **Abstract**

A spherical bearing arrangement (1) comprising: a ball (2) having a bearing surface; and a housing (3) holding the ball, the housing having a pair of counterface bearing surfaces (7,8) separated from one another by a void (10) in which a lubricant is located to provide a deliberate and self-contained reservoir of lubricant for the life of the arrangement.

## Description

This invention relates to a spherical bearing arrangement and more particularly to a spherical bearing arrangement having a void lying between the ball and the housing.

In spherical bearing technology, the clearance is the distance between the bearing surfaces of the ball and the housing in the axial and radial directions. Most metal-to-metal bearings have a low torque between the ball and housing but a reasonably high clearance. Self-lubricating bearings which involve the use of a self-lubricating liner typically have little or no clearance but a high torque. Applications requiring a very tight (low) clearance but little or no torque cannot be fulfilled using typical metal-to-metal bearings. In such applications, despite a very tight fitting or low clearance between the bearing surfaces of the ball and the housing, there should be substantially unmeasurable amounts of torque between the bearing and the housing - i.e. a torque of zero Nm. With a metal-to-metal bearing, this is rather difficult to achieve without lubrication.

The combination of a close-fit metal-to-metal bearing giving tight axial clearances with a low or no torque relationship between the ball and the housing is immensely beneficial for certain applications. It should be borne in mind that low or no torque spherical bearings are not normally metal-to-metal bearings with good axial clearances. For such applications, one would traditionally use a self-lubricating spherical bearing where a self-lubricating liner is attached to the inner surface of the housing to give a good low coefficient of friction but here the axial clearances suffer because the self-lubricating liner itself can flex and compress meaning higher axial clearances. A close-fit metal-to-metal bearing with very low axial clearances (good axial clearances) usually causes high torque and requires constant lubrication which is either very expensive since it requires the fitting of a grease nipple or is not practical because regular access to the spherical bearing is not readily available.

It is known to introduce grooves onto the inner surface of a bearing housing, which grooves can carry lubricant but problems exist with such grooves in that the sharp edges of the grooves can damage the smooth bearing surface of the ball and increase wear and because the grooves allow lubricant to escape between the ball and the bearing surface meaning that the lubricant needs to be topped up if the lubricant in the grooves is to provide sufficient lubrication. Further, the grooves can cause weak spots or points of flexure when a housing is being swaged onto a ball thereby reducing the quality of an otherwise close fit.

It is possible to supply lubricant to the interface between the ball and the housing but for smaller bearings such a supply is over-complicated necessitating the use of grease nipples and the like which are simply impractical for bearings of small size. Further, the lubricant keeps needing to be topped up which is disadvantageous.

It is an object of the present invention to seek to provide a spherical bearing arrangement, a method of manufacturing the same and a housing for use in a spherical bearing arrangement which do not suffer from the above-mentioned problems.

Accordingly, one aspect of the present invention provides a spherical bearing arrangement comprising: a ball having a bearing surface; and a housing holding the ball, the housing having a pair of counterface bearing surfaces separated from one another by a void in which a lubricant is located.

Preferably, the pair of counterface bearing surfaces comprise two annular counterface bearing surfaces each having a radius conforming substantially to the radius of the ball and being concentric with the bearing surface of the ball.

Conveniently, the void comprises a toroidal volume bounded by: the ball; and an inner surface of the housing between the counterface bearing surfaces.

Advantageously, the inner surface of the housing between the counterface bearing surfaces is concave.

Preferably, the inner surface of the housing between the counterface bearing surfaces has a radius which is smaller than the radius of the ball.

Conveniently, the void provides a reservoir of lubricant to lubricate the interface between the bearing surface of the ball and the pair of counterface bearing surfaces of the housing.

Advantageously, the reservoir is a self-contained and sealed reservoir for a body of lubricant.

Preferably, the surface area of the counterface bearing surfaces is less than the surface area of the ball exposed to the void.

Conveniently, the counterface bearing surfaces are metal surfaces and the bearing surface of the ball is a metal surface.

Another aspect of the present invention provides a housing for a ball of a spherical bearing, the housing to be swaged on to and around the ball, the housing comprising, prior to swaging, a substantially cylindrical structure having a thickness varying along the central axis of the housing, wherein the housing is thicker at the ends than in the middle.

Preferably, the housing cylindrical structure has an inner surface and an outer surface, the outer surface being more concave than the inner surface prior to swaging.

Conveniently, the inner surface is substantially straight and the outer surface is concave prior to swaging.

Advantageously, the thinner portion of the housing toward the middle of the substantially cylindrical structure is more flexible than the thicker ends of the cylindrical structure such that, when the housing is swaged around a ball, the middle portion of the housing is deformed more than the edges of the housing leaving the edges of the housing defining bearing surfaces conforming to the radius of the ball and a void toward the middle of the swaged cylindrical structure between the bearing surfaces of the housing contacting the ball.

A further aspect of the present invention provides a method of forming a spherical bearing arrangement comprising: providing a ball and a housing to be swaged on to and around the ball, the housing comprising, prior to swaging, a substantially cylindrical structure having a thickness varying along the central axis of the housing, wherein the housing is thicker at the ends than in the middle; swaging the housing around the ball such that the housing contacts the bearing surface of the ball at two counterface bearing surfaces separated from one another by a void.

Preferably the method comprises the further step of providing a quantity of lubricant between the housing and the ball prior to swaging such that, after swaging, at least a portion of the quantity of lubricant remains in the void.

Advantageously, the ball and housing are immersed in lubricant during the swaging such that the void is filled with lubricant.

In order that the present invention may be more readily understood, embodiments thereof will now be described, by way of example, with reference to the accompanying drawings, in which:
Figure 1 is a cross-section of a spherical bearing arrangement embodying the present invention showing the interface between a ball and a housing;
Figure 2 is a cross-section of a housing embodying the present invention, pre-swaging; and
Figure 3 is a cross-section of another housing embodying the present invention, pre-swaging.

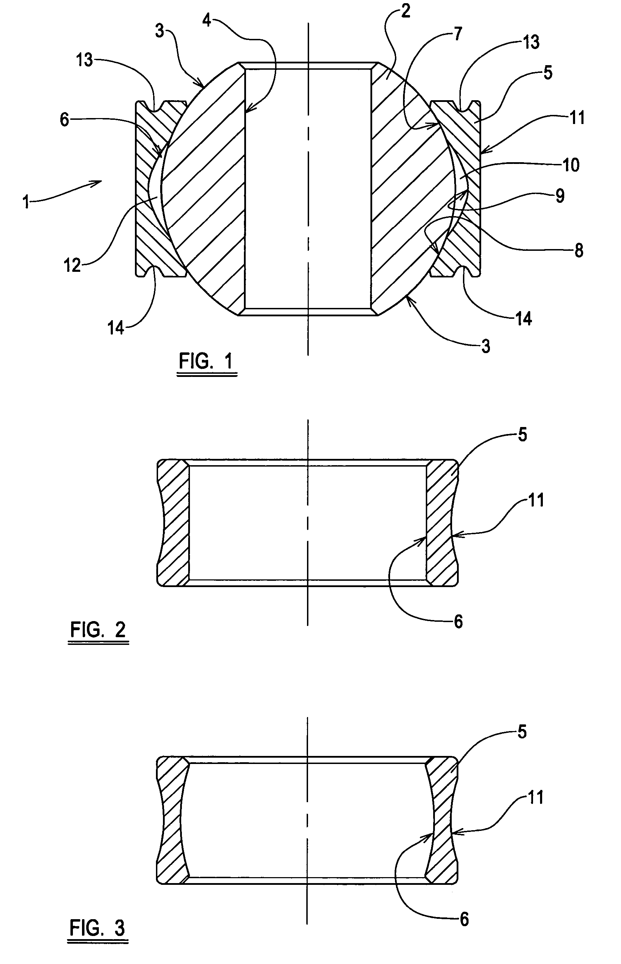

Referring to Figure 1, a spherical bearing arrangement 1 embodying the present invention comprises a ball 2 having a spherical bearing surface 3 and a bore 4 passing through the ball 2. The ball 2 is held in a housing 5 which comprises a substantially cylindrical structure 5 having an inner surface 6. The inner surface 6 comprises: two annular counterface surfaces 7,8 conforming to the radius of the bearing surface of the ball and in intimate contact therewith; and the remainder 9 of the inner surface 6 which separates the two counterface bearing surfaces 7,8 from one another. The remainder 9 of the inner surface 6 is more concave than the radius of the ball 2 and is therefore separated from the ball to create a deliberate and substantial void 10 between the ball 2 and the housing 5.

As stated, the remainder 9 of the inner surface 6 of the housing between the counterface bearing surfaces 7,8 is more concave than the counterface bearing surfaces 7,8 themselves which have a radius which conforms to the radius of the spherical bearing surface 3 of the ball 2. Thus, the radius of the remainder portion 9 of the inner surface 6 of the housing is tighter than that of the counterface bearing surfaces 7,8.

An outer surface 11 of the housing 5 is machined so as to offer a cylindrical outer surface.

The void 10 is a self-contained and sealed toroidal reservoir for a body of lubricant 12 and does not merely contain traces of lubricant but encloses sufficient lubricant to lubricate the bearing surfaces over the life of the part without requiring replenishment. This allows the counterface bearing surfaces 7,8 and the bearing surface 3 of the ball 2 to be constantly lubricated without requiring a costly and impractical grease nipple and allowing the resultant bearing arrangement 1 to be installed as a "fit and forget" part.

The bearing arrangement 1 embodying the present invention as described above is ideally suited to a "fit and forget" installation where the part is not being used in a lubricated environment.

Preferably, the ball 2 and housing 3 are metal parts and the interface between the two, the bearing surfaces, provides a metal-to-metal contact. The axial clearance of the metal-to-metal bearing embodying the present invention is preferably less than 0.003 micrometres whilst maintaining a torque of 0 Nm.

As can be seen from Figure 1, the void 10 is located centrally between the two relatively equally sized counterface bearing surfaces 7,8 and the surface area of the ball exposed to the void 10 is greater than the combined surface area of the two counterface bearing surfaces 7,8. Since the two counterface bearing surfaces 7,8 are annular having very low axial clearances with the ball 2, they provide a good seal either side of the void 10 thereby maintaining the integrity of the reservoir and containing the lubricant 12 between the housing 5 and the ball 2 such that the spherical bearing arrangement 1 can be installed as a "fit and forget" part and the lubricant does not need topping up. The spherical bearing arrangement 1 embodying the present invention can therefore be used substantially as a self-lubricating bearing might be used but, of course, there is no need for any self-lubricating liner or re-lubrication. The spherical bearing arrangement 1 embodying the present invention offers the possibility of a low or no torque bearing with no or very low clearances.

Because of the very low clearances between the counterface bearing surfaces 7,8 and the ball 2, there is no discernible play in the spherical bearing arrangement resulting in a bearing having the desired properties of no or low torque and no or very low clearances.

A spherical bearing arrangement having such very low clearance is sometimes referred to as being "stiff". In this context, the term refers to the high modulus of elasticity of the entire bearing between the part connected to the ball and the part connected to the housing. The term "stiff" does not refer to the torque existing between the ball and the housing. Usually, a spherical bearing would have a gap (large clearance) between ball and housing or be a self lubricating bearing (having a compressible liner between ball and housing which can also give rise to a gap upon compression). It has been found that a driver or pilot of a vehicle can detect a lag when using a bearing having such a gap or compressible liner in its control mechanisms. In contrast, bearing arrangements embodying the present invention are "stiff" and therefore feel to a driver or pilot as if the bearing arrangement is solid, having therefore a corresponding high modulus of elasticity. A vehicle incorporating such stiff bearings therefore responds instantaneously to the driver or pilot's actions.

In preferred embodiments of the invention, the void is created by a portion (the remainder 9) of the inner surface 6 of the bearing housing which, after swaging, is more concave than the counterface bearing surfaces 7,8. It might be possible to introduce grooves or steps in the profile of the inner surface 6 of the bearing but it should be borne in mind that, when attempting to cup swage a substantially cylindrical housing on to a ball in order to provide low clearances between the counterface bearing surfaces and the ball, the grooves or steps would provide a flexing point or point of weakness which would distort the swage causing a less perfect fit of the counterface bearing surfaces to the bearing surface of the ball. The use of a more concave portion 9 of the inner surface 6 of the housing 5 as the means for creating the void 10 dispenses with a flexing point or point of weakness allowing uniform swaging of the housing on to the ball.

Referring to Figures 2 and 3, embodiments of the invention comprise a preformed housing 5 having a substantially cylindrical structure having a thickness varying along the central axis of the housing. The profile of the thickness is such that the housings are thicker at their ends than in the middle portions. The transition between the thicker ends and the thinner middle is preferably a smooth transition and not stepped in any way. Thus, the respective inner and outer surfaces 6,11 of the cylindrical structure of the bearing housing 5 prior to swaging should be linear or curvilinear. Prior to swaging the housing 5 onto the ball 2, lubricant 12, preferably a grease, is applied between the ball 2 and the housing 5. After swaging, a body of lubricant 12 will remain in the void 10 and comprise the lubricant for the life of the part. It is also possible to carry out the swaging step with the housing and ball immersed in lubricant to ensure maximum lubricant within the resultant void.

As shown in Figure 2, one particularly advantageous structure for the bearing housing uses a substantially flat inner cylindrical surface and an outer surface which is concave. When such a housing 5 is cup-swaged on to the ball 2, the middle portion of the housing 5 flexes more than the ends thereby creating the void 10. The ends are swaged onto the ball to provide a low clearance fit as the counterface bearing surfaces 7,8 engage with the bearing surface 3 of the ball 2. When the swaging pressure is released, there is a certain amount of spring back of the ends of the housing 5 from the ball 2 but even this disadvantageous characteristic is reduced almost to the point of elimination by the adoption of the thinner middle portion of the housing 5, thereby contributing to the low clearance between the counterface bearing surfaces 7,8 and the bearing surface 3 of the ball 2.

After the housing 5 has been swaged onto the ball 2, preferably using a cup-swaging technique, the external surfaces of the housing can be machined so as to provide a concentric and cylindrical outer surface 11 with which the bearing housing 5 can be fitted to other parts and also, to a certain extent, to relieve any stresses in the body of the housing. Figure 1 shows two annular grooves 13,14 which have been machined in the top and bottom surfaces of the external surface of the housing 5. The outer surface 11 of the housing 5 has been machined to provide a cylindrical surface for engagement with other parts.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A method of forming a spherical bearing arrangement comprising:
providing a ball and a housing to be swaged on to and around the ball, the housing comprising, prior to swaging, a substantially cylindrical structure having a thickness varying along the central axis of the housing, wherein the housing is thicker at the ends than in the middle and there is a smooth transition between the thicker ends and the thinner middle;
swaging the housing around the ball such that the housing contacts the bearing surface of the ball at two counterface bearing surfaces separated from one another by a void for retaining lubricant.

2. A method according to Claim 1, comprising the further step of providing a quantity of lubricant between the housing and the ball prior to swaging such that, after swaging, at least a portion of the quantity of lubricant remains in the void.

3. A method according to any preceding claim, wherein the ball and housing are immersed in lubricant during the swaging such that the void is filled with lubricant.

4. A housing for a ball of a spherical bearing, the housing to be swaged on to and around the ball, the housing comprising:
prior to swaging, a substantially cylindrical structure having a thickness varying along the central axis of the housing, wherein the housing is thicker at the ends than in the middle and there is a smooth transition between the thicker ends and the thinner middle; and
post swaging, a pair of counterface bearing surfaces separated from one another by a void for retaining lubricant

5. A housing according to Claim 4, wherein the housing has an inner surface and an outer surface, the outer surface being more concave than the inner surface prior to swaging.

6. A housing according to Claim 4, wherein the inner surface is substantially straight and the outer surface is concave prior to swaging.

7. A housing according to any one of Claims 4 to 6, wherein the thinner portion of the housing toward the middle of the substantially cylindrical structure is more flexible than the thicker ends of the cylindrical structure such that, when the housing is swaged around a ball, the middle portion of the housing is deformed more than the edges of the housing leaving the edges of the housing defining bearing surfaces conforming to the radius of the ball and a void toward the middle of the swaged cylindrical structure between the bearing surfaces of the housing contacting the ball.

8. A spherical bearing arrangement comprising:
a ball having a bearing surface; and
a swaged, substantially cylindrical, housing holding the ball, the housing having, prior to swaging, a thickness varying along the central axis of the housing, wherein the housing is thicker at the ends than in the middle and there is a smooth transition between the thicker ends and the thinner middle, and, post swaging, a pair of counterface bearing surfaces separated from one another by a void for retaining lubricant.

9. A spherical bearing arrangement according to Claim 8, wherein the pair of counterface bearing surfaces comprise two annular counterface bearing surfaces each having a radius conforming substantially to the radius of the ball and being concentric with the bearing surface of the ball.

10. A spherical bearing arrangement according to Claim 8 or 9, wherein the void comprises a toroidal volume bounded by:
the ball; and
an inner surface of the housing between the counterface bearing surfaces.

11. A spherical bearing arrangement according to Claim 10, wherein the inner surface of the housing between the counterface bearing surfaces is concave.

12. A spherical bearing arrangement according to Claim 11, wherein the inner surface of the housing between the counterface bearing surfaces has a radius which is smaller than the radius of the ball.

13. A spherical bearing arrangement according to any of claims 8 to 12, wherein the void provides a reservoir of lubricant to lubricate the interface between the bearing surface of the ball and the pair of counterface bearing surfaces of the housing.

14. A spherical bearing arrangement according to any of claims 8 to 13, wherein the reservoir is a self-contained and sealed reservoir for a body of lubricant.

15. A spherical bearing arrangement according to any of claims 8 to 14, wherein the surface area of the counterface bearing surfaces is less than the surface area of the ball exposed to the void.

16. A spherical bearing arrangement according to any of claims 8 to 15, wherein the counterface bearing surfaces are metal surfaces and the bearing surface of the ball is a metal surface.
